# EUROPÄISCHE PATENTSCHRIFT

(11) **EP 2 299 148 B1**
(45) Veröffentlichungstag und Bekanntmachung des Hinweises auf die Patenterteilung: **13.06.2012**
(21) Anmeldenummer: 10007832.8
(22) Anmeldetag: 28.07.2010
(51) Int. Cl.: F16J 15/06, F16J 15/08, F01N 13/18

(54) **Dichtungssystem**
Seal system
Système d'étanchéification

(30) Priorität: 17.09.2009 DE 102009042081
(43) Veröffentlichungstag der Anmeldung: 23.03.2011
(73) Patentinhaber: ElringKlinger AG, 72581 Dettingen (DE)
(72) Erfinder: Kolasinski, Wojtek, 72622 Nürtingen (DE); Kullen, Wilhelm, 72584 Hülben (DE)
(74) Vertreter: Hoeger, Stellrecht & Partner Patentanwälte

(56) Entgegenhaltungen:
- WO-A1-2008/037422
- US-A1- 2008 073 859

## Beschreibung

Die Erfindung betrifft ein Dichtungssystem, insbesondere für Anschlußverbindungen an Strömungswegen für Heißgase, wie Abgasströme von Verbrennungskraftmaschinen, mit einem Dichtungsträger und einem Dichtelement, das eine zwischen Dichtflächen gelegene Dichtungsebene definiert und wobei der Dichtungsträger und das Dichtelement separate Bauteile darstellen, die mit Hilfe einer Verbindung verliersicher miteinander verbunden sind. (Siehe US.A.2008/0073859 (Kullen et al.))

Dichtungssysteme für Anschlußverbindungen in Heißgasbereichen, etwa bei Verbrennungskraftmaschinen, am Übergang zwischen dem Zylinderkopf und dem Abgaskrümmer oder am Krümmerausgang, am Turbolader oder Katalysator bedürfen eines vergleichsweise hohen, konstruktiven Aufwands, da an den genannten Stellen hohe thermische und mechanische Beanspruchungen auftreten.

Als Dichtelemente eignen sich metallische Dichtungen aus hitzebeständigen Legierungen, die an Dichtungsträgern vormontiert werden können. Die Vormontage der Dichtelemente erfolgt in unterschiedlichster Weise verbunden mit einem zusätzlichen Herstellungsaufwand etwa für einen Form- oder Kraftschluß zwischen dem Dichtungsträger und dem Dichtelement ermöglichenden Einrichtungen. Dies bedingt zudem einen Materialmehraufwand.

Ausgehend von diesem Stand der Technik stellt sich die Erfindung die Aufgabe, ein Dichtungssystem für Anschlußverbindungen an Strömungswegen für Heißgase zu entwickeln, dessen Vormontage-Aufwand minimiert ist.

Erfindungsgemäß ist diese Aufgabe durch ein Dichtungssystem gelöst, das die Merkmale des Patentanspruches 1 in seiner Gesamtheit aufweist.

Danach besteht die wesentliche Besonderheit der Erfindung darin, dass die Verbindung zwischen dem Dichtungsträger und dem Dichtelement durch eine Aufnahme für das Dichtelement in den Dichtungsträger gebildet ist, welche ermöglicht, dass das Dichtelement in seinem in der Aufnahme eingelegten Zustand radial vorgespannt ist und somit kraftschlüssig gehalten ist.

Bevorzugte Ausführungen ergeben sich aus den Unteransprüchen.

Um einen möglichst geringen Herstellungsaufwand zu erreichen, ist das Dichtelement kreisförmig ausgebildet und die Aufnahme an dem Dichtungsträger beispielsweise als Nut oder Ringnut ausgebildet mit einer offenen Seite zu der Dichtungsebene hin orientiert. Die Nut oder Ringnut ist grundsätzlich derart dimensioniert, dass das kreisförmige Dichtelement zumindest teilweise radial darin eingelegt werden kann, wobei zumindest diejenige Flanke der Nut, die in Anlage zu einem Umfangsabschnitt des Dichtelementes gelangt, eine von der Kreisform abweichende Gestalt hat. Dies kann dem Grunde nach die äußere und/oder radial innere Flanke der betreffenden Nut sein. Insgesamt wird dadurch das Dichtelement radial leicht vorgespannt und kann so ohne die Notwendigkeit der Ausformung oder Anbringung von zusätzlichen Fixierhilfen an dem Dichtelement oder an dem Dichtungsträger verliersicher gehalten werden. Das Dichtelement ist gegen eine in eine Richtung quer zu der Dichtungsebene verlaufende Bewegung gesichert, kann aber für einen Dichtvorgang sich hinreichend anpassen.

Insgesamt müssen aber die Außen- und Innenkonturverläufe von Dichtelement und Dichtungsträger derart unterschiedlich sein, dass es in benachbarten Teilbereichen zu einer klemmenden Anlage zwischen den genannten Bauteilen kommt. So besteht die Möglichkeit, bei einer bevorzugten Ausführungsform des Dichtungssystems eine demgemäß von der Kreisform abweichende Flanke der Aufnahmenut elliptisch oder polygonal auszubilden, wobei bevorzugt die radiale Abweichung von der Kreisform im Zehntel Millimeterbereich liegen kann. Alternativ oder zusätzlich kann auch das Dichtelement eine vergleichbare Ausgestaltung wie für das Dichtungssystem angegeben aufweisen und insbesondere bei einer Ausgestaltung als Vieleck für die Flanke der Nut sowie für die Außenkontur des Dichtelementes ist der Erhalt einer Art Verzahnungsstruktur möglich, die beim zahnenden Eingriff von Dichtelement und Dichtungsträger sicherstellt, dass radiale Relativbewegungen vermieden sind.

Als Dichtungsträger selbst kann sowohl ein Ringkörper fungieren als auch ein platinen- oder flanschartiges Bauteil mit zumindest einer Durchgangsöffnung, um die die Nut mit ihrer vorzugsweise senkrecht zu der Dichtungsebene offenen Seite angeordnet sein kann. Solche platinenartigen Dichtungsträger eignen sich insbesondere für Anschlußverbindungen zwischen einem Abgaskrümmer und einem Zylinderkopfteil einer Verbrennungskraftmaschine.

Bei besonders vorteilhaften Ausführungsformen ist das Dichtelement in der Art eines Formringes mit C-, U- oder V-förmigem Profilquerschnitt ausgebildet. Vorzugsweise ist ferner vorgesehen, dass ein derart aufgebauter Formring relativ zum Dichtungsträger und zum Strömungsweg der Heißgase in solcher Lageanordnung vorgesehen ist, dass die Profilform des Formringes radial nach innen in Richtung der Durchgangsöffnung geöffnet ist.

Bei einer dahingehenden Lageorientierung gestaltet sich nicht nur die Verbindung zwischen Formring und Dichtungsträger am Sitz desselben konstruktiv besonders einfach, sondern aufgrund der zum Strömungsweg der Heißgase hin offenen Profilform ergeben sich auch besonders gute Verhältnisse hinsichtlich der Abdichtwirkung, weil der Formring vom Profilinneren her im Betrieb druckbeaufschlagt ist, was am Formring insbesondere im Bereich seiner Profilflanken aufweitend und dichtkrafterhöhend wirkt.

Anstelle einer durch die Flanke einer Ringnut gebildeten Ringfläche der Aufnahme kann bei alternativen Ausführungsbeispielen die Ringfläche durch eine radial innen liegende Flanke eines am Dichtungsträger radial vorstehenden Körpers gebildet sein. Dabei kann die Anordnung so getroffen sein, dass der Körper ein einstückiges Bestandteil des Dichtungsträgers ist. Bei einem flachen-, platinen- oder flanschartigen Dichtungsträger kann dieser auch mehrlagig ausgebildet sein, wobei der die Ringfläche bildende Körper durch eine die Durchgangsöffnung des Dichtungsträgers umgebende Randfläche einer der Lagen gebildet ist.

Nachstehend ist die Erfindung anhand von in der Zeichnung dargestellten Ausführungsbeispielen im Einzelnen erläutert. Es zeigen in prinzipieller und nicht maßstäblicher Darstellung die
- Fig. 1: eine Draufsicht auf ein Dichtungssystem mit einem flanschartigen Dichtungsträger;
- Fig.2: einen teilweisen Längsschnitt entlang der Linie II-II in Fig. 1;
- Fig. 3: eine der Fig. 1 ähnliche Draufsicht eines abgewandelten Ausführungsbeispieles;
- Fig. 4: einen teilweisen Längsschnitt entlang der Linie IV-IV in Fig. 3;
- Fig. 5: einen teilweisen Längsschnitt entlang der Linie V-V in Fig. 3 und
- Fig. 6: einen der Fig. 2 ähnlichen, teilweisen Längsschnitt eines wei- ter abgewandelten Ausführungsbeispieles mit einem mehrla- gigen Dichtungsträger.

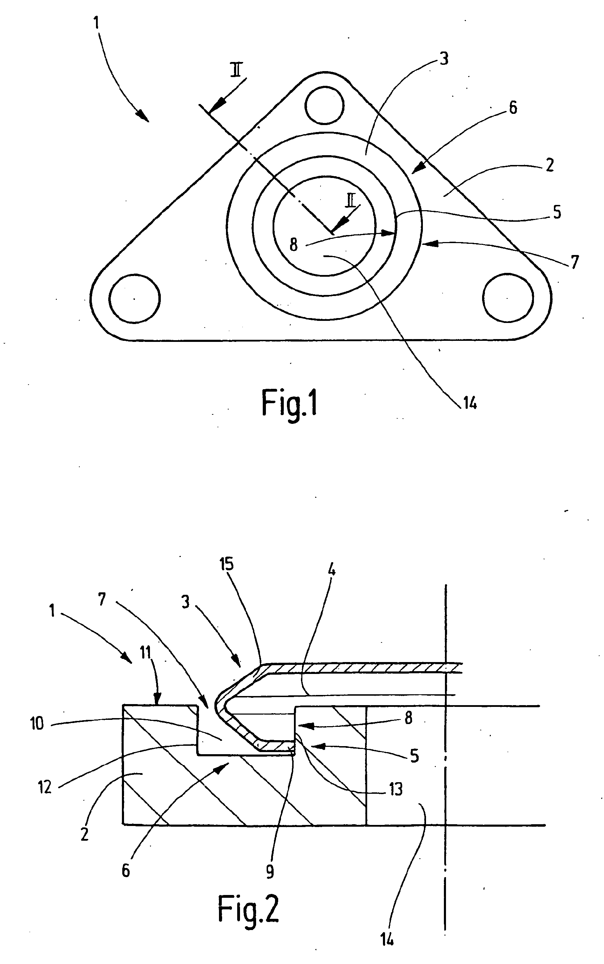

In Fig. 1 ist in einer Draufsicht schematisch ein Dichtungssystem 1 für eine Abgasanlage einer Verbrennungskraftmaschine gezeigt. Das Dichtungssystem 1 besteht exemplarisch aus einem dreieckförmigen, flanschartigen Dichtungsträger 2, der eine Durchgangsöffnung 14 für Abgase aufweist. Der Dichtungsträger 2 dient mit einer als Ringnut 10 um die Durchgangsöffnung 14 herum gebildeten Aufnahme 6 zum Aufnehmen und Halten eines als Formring 15 gebildeten Dichtelementes 3.

Wie die Fig. 2 in einem teilweisen Längsschnitt II - II in Fig.1 durch das Dichtungssystem 1 zeigt, ist die Ringnut 10 als U-förmige Nut 7 mit einer radial äußeren Flanke 12 und einer radial inneren Flanke 13, die in Strömungsrichtung der Abgase ausgerichtet sind, gebildet. Der vorzugsweise als einteiliger Profilkörper ausgebildete metallische Formring 15 liegt axial etwa zur Hälfte in der Nut 7 und definiert eine Dichtungsebene 4 senkrecht zur Strömungsrichtung der Abgase. Die Nut 7 weist eine Flanke 8 auf, die radial innenliegend ist, deren Umfangsgestalt von der Kreisform geringfügig abweicht und in dem Ausführungsbeispiel bevorzugt elliptisch gewählt ist. Mit einen Umfangsabschnitt 9 liegt das Dichtelement 3 unter Bildung einer in axialer Richtung kraftschlüssigen Verbindung 5 an. Auf diese Weise ist durch eine einfache konstruktive Maßnahme ohne zusätzliche Befestigungsmittel eine einfache Vormontage des Dichtungssystems 1 ermöglicht, bei der das Dichtelement 3 in eine Stirnseite 11 des Dichtungsträgers 2 derart eingesetzt werden kann, dass das Dichtelement 3 zumindest gegen eine in eine Richtung quer zu der Dichtungsebene 4 verlaufende Bewegung gesichert ist und dennoch für einen Dichtvorgang bewegbar an dem Dichtungsträger 2 verbleibt.

Sofern auf den flanschartigen Dichtungsträger 2 ein nicht näher dargestelltes Deckelteil verbracht wird, wird in Blickrichtung auf die Fig. 2 gesehen auf die obere Flanke des V-förmigen Dichtelementes 3 eine Preßkraft ausgeübt und der federelastisch nachgiebige Formring mit seinem äußerst linken Scheitel- oder Umlenkbereich nach links bezogen auf die Querschnittsdarstellung so lange in die Nut 7 verdrängt, bis gegebenenfalls der dahingehende Umlenkbereich an der äußeren Flanke 12 des Dichtungsträgers 2 für den Erhalt einer weiteren Abdichtebene unter Vorspannung anstößt,

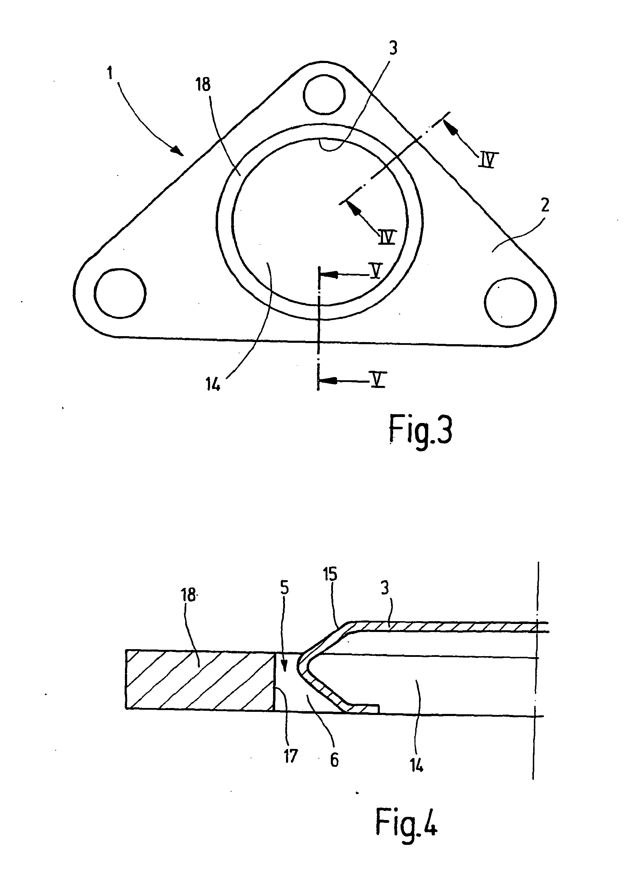

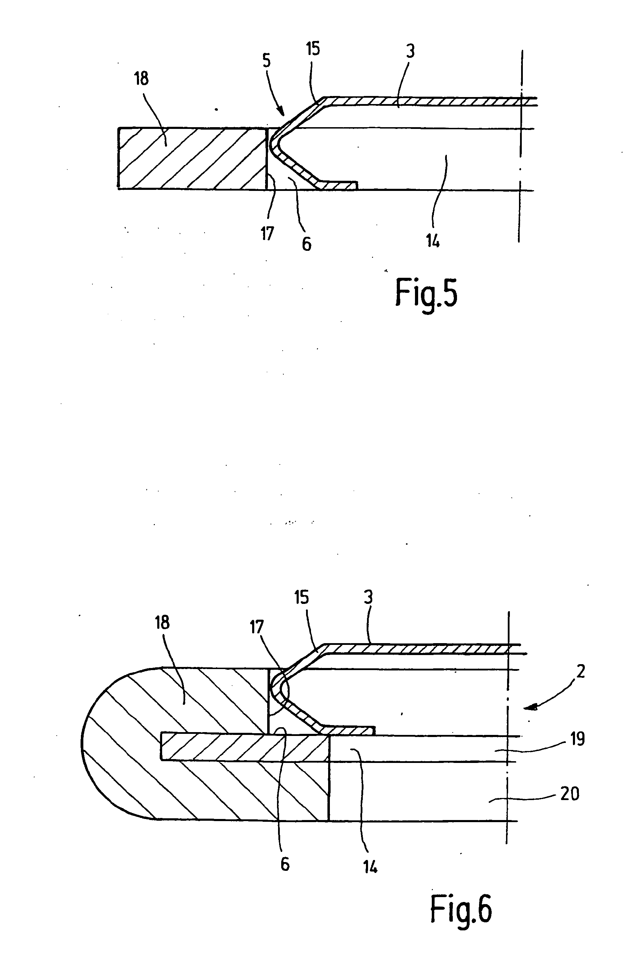

Die Fig. 3 bis 5 verdeutlichen ein Ausführungsbeispiel gemäß der Erfindung bei dem die Ringfläche der Aufnahme 5 nicht durch die Flanke einer Nut, sondern durch die radial innen liegende Flanke 17 eines Körpers 18 gebildet ist, der in der Art eines sogenannten Hinterlandstoppers am Dichtungsträger 2 radial vorstehend vorgesehen ist. Wiederum haben der Außenumfang des Dichtelementes 3 eine von der Kreisform abweichende Gestalt, so dass das Dichtelement 3 nicht vollumfänglich, sondern lediglich örtlich in Zusammenwirkung mit der Flanke 17 verspannt wird. Dementsprechend zeigt die Schnittdarstellung von Fig. 4 einen Umfangsabschnitt, an dem keine Verspannung stattfindet, während die Schnittdarstellung entsprechend Fig. 5 einen Abschnitt zeigt, an dem die Verspannung stattfindet.

Das weitere Ausführungsbeispiel von Fig. 6 zeigt einen Dichtungsträger 2 in Form einer mehrlagigen Platine, wobei eine die eigentliche Aufnahme 6 bildenden Lage 19 und eine daran anliegende Lage 20 vorgesehen sind, wobei letztere mit einer äußeren Randfläche um den Rand der Lage 19 umgelegt ist und wobei der umgelegte Teil den Körper 18 bildet, der bei diesem Ausführungsbeispiel als Stopper dient, dessen innere Flanke 17 die Ringfläche für das Verspannen des Dichtelementes 13 bildet.

## Patentansprüche

1. Dichtungssystem, insbesondere für Anschlussverbindungen an Strömungswegen für Heißgase, wie Abgasströme von Verbrennungskraftmaschinen, mit einem Dichtungsträger (2) und einem Dichtelement (3), das eine zwischen Dichtflächen gelegene Dichtungsebene (4) definiert und wobei der Dichtungsträger (2) und das Dichtelement (3) separate Bauteile darstellen, die mit Hilfe einer Verbindung (5) verliersicher miteinander verbunden sind, wobei die Verbindung (5) durch eine Aufnahme (6) für das Dichtelement (3) in dem Dichtungsträger (2) gebildet ist, welche das Dichtelement (3) in seinem in die Aufnahme (6) eingelegten Zustand radial verspannt,
**dadurch gekennzeichnet, dass** der Außenumfang des Dichtelements (3) eine von der Kreisform abweichende elliptische oder polygonale Kontur hat.

2. Dichtungssystem nach Anspruch 1, **dadurch gekennzeichnet, dass** das Dichtelement (3) ein Formring (15) mit vorzugsweise C-, U- oder V-förmigem Profilquerschnitt ist.

3. Dichtungssystem nach Anspruch 2, **dadurch gekennzeichnet, dass** der Formring (15) mit radial nach innen offener Profilform ausgebildet ist und aus federelastisch nachgiebigen Materialien besteht, wie beispielsweise Federstahl.

4. Dichtungssystem nach einem der voranstehenden Ansprüche, **dadurch gekennzeichnet, dass** die Aufnahme (6) durch eine Ringfläche (12, 13, 17) gebildet ist.

5. Dichtungssystem nach einem der voranstehenden Ansprüche, **dadurch gekennzeichnet, dass** die Ringfläche durch eine Flanke (12, 13) einer U-förmigen Ringnut (10) gebildet ist, die an einer Stirnseite (11) des Dichtungsträgers (2) eingeformt ist und mit ihrer einen Seite zur Dichtungsebene (4) hin offen ist.

6. Dichtungssystem nach Anspruch 5, **dadurch gekennzeichnet, dass** das Dichtelement (3) durch seine Anlage an einer radial äußeren Flanke (12) der Nut (7) radial vorgespannt ist.

7. Dichtungssystem nach einem der voranstehenden Ansprüche, **dadurch gekennzeichnet, dass** der Dichtungsträger (2) ein flaches, platinen- oder flanschartiges Bauteil mit zumindest einer Durchgangsöffnung (14) ist, um die die Nut (7) mit ihrer in senkrechter Richtung zu der Dichtungsebene (4) hin offenen Seite angeordnet ist.

8. Dichtungssystem nach einem der Ansprüche 1 bis 4, **dadurch gekennzeichnet, dass** die Ringfläche durch eine radial innenliegende Flanke (17) eines am Dichtungsträger (2) radial vorstehenden Körpers (18) gebildet ist.

9. Dichtungssystem nach Anspruch 8, **dadurch gekennzeichnet, dass** der Dichtungsträger (2) ein flaches, platinen- oder flanschartiges mehrlagiges Bauteil mit zumindest einer Durchgangsöffnung (14) ist, wobei der die Ringfläche (17) bildende Körper (18) durch eine Durchgangsöffnung (14) umgebende Randfläche einer der Lagen (20) gebildet ist.

## Claims

1. Gasket system, in particular for connections to flow paths for hot gases such as exhaust gases of internal combustion engines, with a gasket support (2) and a sealing element (3), which defines a sealing plane (4) located between sealing surfaces and wherein the gasket support (2) and the sealing element (3) constitute separate structural parts, which are connected non-detachably to one another by means of a connection (5), wherein the connection (5) is formed by a seating (6) for the sealing element (3) in the gasket support (2), which radially braces the sealing element (3) in its disposition when it is inserted into the seating (6), **characterised in that** the outer periphery of the sealing element (3) has an elliptical or polygonal contour differing from a circular shape.

2. Gasket system according to claim 1, **characterised in that** the sealing element (3) is a shaped ring (15) preferably with a C-, U- or V-shaped profile cross-section.

3. Gasket system according to claim 2, **characterised in that** the shaped ring (15) is configured with a profile shape open radially inwards and is made from elastically flexible materials such as spring steel, for example.

4. Gasket system according to one of the preceding claims, **characterised in that** the seating (6) is formed by an annular surface (12, 13, 17).

5. Gasket system according to one of the preceding claims, **characterised in that** the annular surface is formed by a flank (12, 13) of a U-shaped annular groove (10), which is moulded on a face (11) of the gasket support (2) and is open at one side towards the sealing plane (4).

6. Gasket system according to claim 5, **characterised in that** the sealing element (3) is radially biased by its abutment against a radially outer flank (12) of the groove (7).

7. Gasket system according to one of the preceding claims, **characterised in that** the gasket support (2) is a flat, bar- or flange-like structural part with at least one through opening (14), around which the groove (7) is arranged with its side open towards the sealing plane (4) in perpendicular direction.

8. Gasket system according to one of claims 1 to 4, **characterised in that** the annular surface is formed by a radially internally located flank (17) of a radially projecting body (18) on the gasket support (2).

9. Gasket system according to claim 8, **characterised in that** the gasket support (2) is a flat, bar- or flange-like multilayered structural part with at least one through opening (14), wherein the body (18) forming the annular surface (17) is formed by an edge surface of one of the layers (20) surrounding a through opening (14).

## Revendications

1. Système d'étanchéification, en particulier pour des liaisons de raccordement à des voies d'écoulement pour des gaz chauds, tels que des écoulements de gaz d'échappement de moteurs à combustion interne, comportant un support d'étanchéification (2) et un joint d'étanchéité (3), lequel définit un plan d'étanchéification (4) posé entre des surfaces étanches, et sachant que le support d'étanchéification (2) et le joint d'étanchéité (3) constituent des composants bien distincts, qui sont reliés entre eux à l'aide d'une liaison (5) de manière fiable contre les pertes, sachant que la liaison (5) est formée par un logement (6) pour le joint d'étanchéité (3) dans le support d'étanchéification (2), lequel logement tend radialement le joint d'étanchéité (3) lorsqu'il est posé dans le logement (6),
**caractérisé en ce que** la périphérie extérieure du joint d'étanchéité (3) présente un profil elliptique ou polygonale différant de la forme circulaire.

2. Système d'étanchéification selon la revendication 1, **caractérisé en ce que** le joint d'étanchéité (3) est un anneau moulé (15) avec une section transversale de profil en forme de C, de U ou de V.

3. Système d'étanchéification selon la revendication 2, **caractérisé en ce que** l'anneau moulé (15) est réalisé avec une forme profilée ouverte radialement vers l'intérieur et se compose de matériaux souples élastiques tels que l'acier à ressorts.

4. Système d'étanchéification selon l'une quelconque des revendications précédentes, **caractérisé en ce que** le logement (6) est formé par une surface annulaire (12, 13, 17).

5. Système d'étanchéification selon l'une quelconque des revendications précédentes, **caractérisé en ce que** la surface annulaire est formée par un flanc (12, 13) d'une rainure annulaire (10) en forme de U, laquelle est formée sur le côté frontal (11) du support d'étanchéification (2) et est ouverte avec son seul côté en direction du plan d'étanchéification (4).

6. Système d'étanchéification selon la revendication 5, **caractérisé en ce que** le joint d'étanchéité (3) est précontraint radialement par sa position sur un flanc (12) le plus à l'extérieur radialement de la rainure (7).

7. Système d'étanchéification selon l'une quelconque des revendications précédentes, **caractérisé en ce que** le support d'étanchéification (2) est un composant plat, en forme de disque ou de flanc, avec au moins une ouverture de passage (14), autour de laquelle est disposée la rainure (7) avec son côté ouvert en direction du plan d'étanchéification (4) dans une direction perpendiculaire.

8. Système d'étanchéification selon l'une quelconque des revendications 1 à 4, **caractérisé en ce que** la surface annulaire est formée par un flanc (17) se trouvant à l'intérieur radialement d'un corps (18) faisant saillie radialement au niveau du support d'étanchéification (2).

9. Système d'étanchéification selon la revendication 8, **caractérisé en ce que** le support d'étanchéification (2) est un composant multicouche plat, en forme de disque ou de flanc, avec au moins une ouverture de passage (14), sachant que le corps (18) formant la surface annulaire (17) est formé par une surface de bord d'une des couches (20) entourant l'ouverture de passage (14).
